# EUROPEAN PATENT APPLICATION

(11) **EP 4 040 553 A1**
(43) Date of publication of application: **10.08.2022**
(21) Application number: 20892364.9
(22) Date of filing: 10.07.2020
(51) Int. Cl.: H01M 10/04

(54) **ELECTRODE ASSEMBLY AND MANUFACTURING METHOD THEREFOR**

(30) Priority: 27.11.2019 KR 20190154664
(71) Applicant: LG ENERGY SOLUTION, LTD., Seoul 07335 (KR)
(72) Inventor: KWAK, Jin Seop, Daejeon 34122 (KR)
(74) Representative: Plasseraud IP
(86) International application number: PCT/KR2020/009063
(87) International publication number: WO 2021/107315

(57) **Abstract**

A method for manufacturing an electrode assembly according to the present invention is a method for manufacturing an electrode assembly in which a negative electrode, a separator, and a positive electrode are repeatedly stacked, the method comprising: a unit cell manufacturing step (S10) of manufacturing a unit cell having a predetermined stack structure of the negative electrode, the separator, and the positive electrode; a film inserting step (S20) of inserting a film into a die; a unit cell stacking step (S30) of stacking the unit cell into the die; and an adhesive applying step (S40) of applying an adhesive between the stacked unit cell and the film within the die, wherein the unit cell stacking step (S30) and the adhesive applying step (S40) are repeatedly performed until stacking of predetermined unit cells is completed after the film inserting step (S20).

An electrode assembly according to the present invention is an electrode assembly in which a negative electrode, a separator, and a positive electrode are repeatedly stacked, the electrode assembly comprising a film disposed to cover one of side surfaces defined by stacking the negative electrode, the separator, and the positive electrode, wherein the film is bonded with an adhesive to the side surface defined by stacking the negative electrode, the separator, and the positive electrode.

## Description

### CROSS-REFERENCE TO RELATED APPLICATION

The present application claims the benefit of the priority of Korean Patent Application No. 10-2019-0154664, filed on November 27, 2019, which is hereby incorporated by reference in its entirety.

### TECHNICAL FIELD

The present invention relates to an electrode assembly and a method for manufacturing same, and more particularly, to: a method for manufacturing an electrode assembly, wherein, in the method, a fixing tape according to the related art is not used, and thus problems occurring upon attachment of the fixing tape may be resolved; and an electrode assembly which may be manufactured through the manufacturing method above.

### BACKGROUND ART

Batteries for storing electric energy are generally classified into a primary battery and a secondary battery. The primary battery is a disposable consumable battery, but on the other hand, the secondary battery is a rechargeable battery which is manufactured by using a material in which oxidation and reduction processes between electric current and substances are repeatable. That is, when the reduction reaction to the material is performed by the current, power is recharged. Also, when the oxidation reaction to the material is performed, the power is discharged. Such recharging and discharging may be performed repeatedly.

Among various types of secondary batteries, a lithium secondary battery is generally manufactured by mounting, to a case, an electrode assembly in which a positive electrode (cathode), a separator, and a negative electrode (an anode) are stacked. The recharging and discharging of the lithium secondary battery are performed while lithium ions are intercalated into the negative electrode from lithium metal oxide of the positive electrode and deintercalated therefrom repeatedly.

The electrode assembly is provided as one electrode assembly obtained by: stacking a fixed number of unit cells, each of which comprises a negative electrode, a separator, and a positive electrode stacked in a predetermined order; or stacking a positive electrode, a separator, and a negative electrode one by one repeatedly. Also, the electrode assembly is accommodated in a case such as a cylindrical can, a prismatic pouch, or the like, and finally, a secondary battery is manufactured.

Also, a winding method, a stacking method, a stacking and folding method, and the like are well-known as a method for manufacturing the electrode assembly. In the winding method, a separator is stacked between the negative electrode and the positive electrode and then rolled. In the stacking method, a negative electrode and a positive electrode are cut into desired width and length and then the negative electrode, a separator, and the positive electrode are repeatedly stacked. In the stack and folding method, unit cells are placed side by side on a folding separator and then folded from one side.

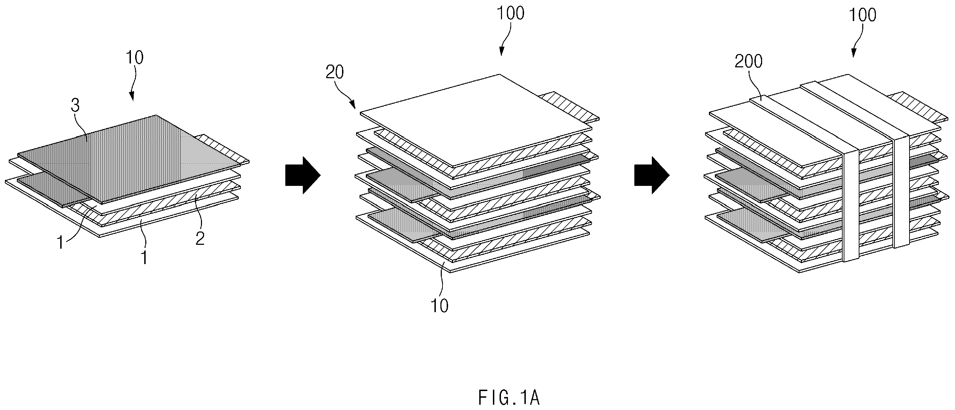

An electrode assembly through the stacking method of the above-described methods is manufactured in a manner as shown in FIG. 1A schematically illustrating a manufacturing process of the related art in which a predetermined number of positive electrodes 2, separators 1, and negative electrodes 3 are stacked on each other to manufacture a unit cell 10, and then, a predetermined number of unit cells 10 are stacked on each other to manufacture an electrode assembly 100. For reference, in the electrode assembly illustrated in FIG. 1A, a mono cell, in which a separator/a positive electrode/a separator/a negative electrode are stacked from the bottom, is manufactured as a unit cell 10, and a plurality of unit cells 10 are stacked on each other. Here, a half cell 20, in which a separator/an electrode (a negative electrode or a positive electrode)/a separator are stacked in the order, is placed on the uppermost layer so that the separator 1 is positioned on the uppermost layer.

Also, when a predetermined number of unit cells 10 are stacked, fixing tapes 200 for fixing the electrode assembly 100 are attached to wrap the circumference of the electrode assembly 100 (or to bind a side surface to a top surface and a bottom surface), thereby binding the unit cells 10.

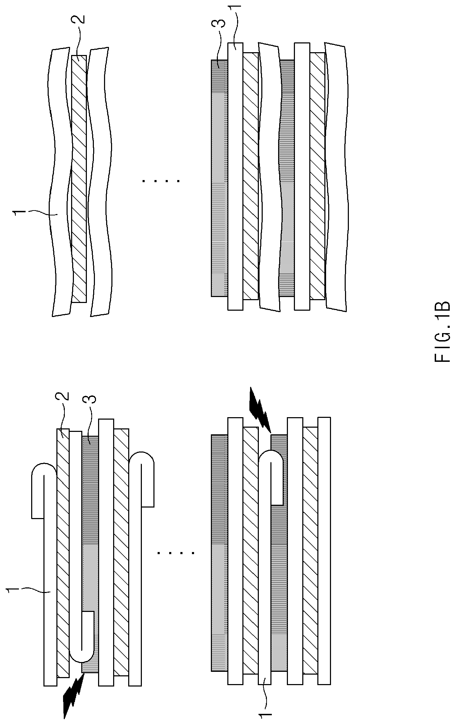

However, as shown in FIG. 1B illustrating a state in which folding and wrinkling of a separator occur in a structure of an electrode assembly according to the related art, a structure of making the binding through the fixing tape 200 described above may have a problem in which an end of the separator 1 is folded and wrinkled due to pressure applied when the fixing tape 200 is attached.

The folding and wrinkling of the separator 1 may cause the negative electrode 3 and the positive electrode 2 to come into contact with each other, which is likely to cause short circuit.

### DISCLOSURE OF THE INVENTION

### TECHNICAL PROBLEM

Thus, to solve the problems described above, a main object of the present invention is to provide an electrode assembly and a method for manufacturing same, wherein, a process of additionally attaching a fixing tape after stacking of electrode assemblies is completed may be removed.

### TECHNICAL SOLUTION

An electrode assembly according to the present invention in order to achieve the object described above is an electrode assembly in which a negative electrode, a separator, and a positive electrode are repeatedly stacked, the electrode assembly comprising a film disposed to cover one of side surfaces defined by stacking the negative electrode, the separator, and the positive electrode, wherein the film is bonded with an adhesive to the side surface defined by stacking the negative electrode, the separator, and the positive electrode.

The film is disposed on each of two facing side surfaces of the side surfaces defined by stacking the negative electrode, the separator, and the positive electrode.

The adhesive may be one selected from flowable resin, a heat curable adhesive, and a UV curable resin material.

Here, the film may have a length longer than a height of the side surface defined by stacking the negative electrode, the separator, and the positive electrode, and the film may have a structure in which both ends extend from the side surface and are folded to be bonded to a lowermost surface and an uppermost surface, respectively.

Also, the present invention further provides a manufacturing method by which the electrode assembly having the configuration described above may be manufactured.

A manufacturing method according to the present invention is a method for manufacturing an electrode assembly in which a negative electrode, a separator, and a positive electrode are repeatedly stacked, the method comprising: a unit cell manufacturing step (S10) of manufacturing a unit cell having a predetermined stack structure of the negative electrode, the separator, and the positive electrode; a film inserting step (S20) of inserting a film into a die; a unit cell stacking step (S30) of stacking the unit cell into the die; and an adhesive applying step (S40) of applying an adhesive between the stacked unit cell and the film within the die, wherein the unit cell stacking step (S30) and the adhesive applying step (S40) are repeatedly performed until stacking of predetermined unit cells is completed after the film inserting step (S20).

In the unit cell manufacturing step (S10), the unit cell is manufactured so that ends of the separators are bonded to each other to form a bonding portion, and in the adhesive applying step (S40), the adhesive is applied to be injected between the bonding portions of the vertically neighboring unit cells.

Also, in the unit cell manufacturing step (S10), a mono cell in which the separator/the negative electrode/the separator/the positive electrode are stacked sequentially from the bottom or a mono cell in which the separator/the positive electrode/the separator/the negative electrode are stacked sequentially from the bottom is manufactured as the unit cell. Also, a half cell in which the separator/the negative electrode/the separator are stacked sequentially from the bottom or a half cell in which the separator/the positive electrode/the separator are stacked sequentially from the bottom is separately manufactured as the unit cell in addition to the mono cell. Also, while the unit cell stacking step (S30) is repeatedly performed, the mono cells are stacked, wherein, when the unit cell stacking step (S30) is finally performed, the half cell is stacked.

The adhesive applied in the adhesive applying step (S40) may be one selected from flowable resin, a heat curable adhesive, and a UV curable resin material.

In a case in which the adhesive is the heat curable adhesive, the method further comprises a heating step (S41) of applying heat to the die to cure the heat curable adhesive.

In addition, when the adhesive is the UV curable resin material, the method further comprises a UV irradiating step (S42) of allowing ultraviolet light to pass through the film so that a portion to which the adhesive is applied is irradiated with the ultraviolet light.

When the film is inserted into the die in the film inserting step (S20), a lower end of the film may be inserted in a folded state so that the lower end is stacked below a lowermost surface of a first unit cell when the first unit cell is stacked. Also, the method may further comprise a film folding step (S50) in which, when stacking of the last unit cell is complete, an upper end of the film is folded so that the upper end is stacked on an uppermost surface of the uppermost unit cell.

### ADVANTAGEOUS EFFECTS

In the electrode assembly having the technical features described above according to the present invention, the film is attached to the side surface of the electrode assembly instead of using the fixing tape (that is, pressure generated when the fixing tape is attached is removed). Thus, the folding or wrinkling of the separator occurring in the structure of the related art may be prevent.

In the present invention, each unit cell is bonded to the film separately, and thus the unit cells and the film may be bonded to each other more stably although the pressure is not applied. Particularly, the bonding portion is provided at the end of the unit cell, and thus, the movement of the individual unit cells are fixed. Therefore, the entire alignment of the electrode assembly may also be improved.

In addition, in the present invention, the upper end and the lower end of the film are folded to cover the uppermost layer and the lowermost layer of the electrode assembly, which may prevent the adhesive from flowing down before the adhesive is cured.

### BRIEF DESCRIPTION OF THE DRAWINGS

FIG. 1A is a view schematically illustrating a manufacturing process of an electrode assembly of the related art.
FIG. 1B is a view schematically illustrating a state in which a separator is folded and wrinkled in a structure of an electrode assembly of the related art.
FIG. 2 is a flow chart of a method for manufacturing an electrode assembly of the present invention.
FIG. 3 is a view illustrating a state in which, during a unit cell manufacturing step, a negative electrode, a separator, and a positive electrode are stacked on each other and manufactured as a unit cell.
FIG. 4A is a view showing: a cross-section (a) of a die in a method for manufacturing an electrode assembly of the present invention; and a state (b) in which a film is attached to the inside of the die.
FIG. 4B is a view additionally illustrating: a state (c) in which a unit cell is placed between the films inside the die illustrated in FIG. 4A; a state (d) in which an adhesive is applied between the placed unit cell and the film by a glue gun; and a state (e) in which a next unit cell is additionally placed, and an adhesive is applied between the placed unit cell and the film by a glue gun.
FIG. 4C is a view additionally illustrating: a state (f) in which an uppermost unit cell is placed into the die illustrated in FIG. 4B, and then, an upper end of the film is folded; and a state (g) in which the inside of the die is irradiated with UV light to cure the applied adhesive.
FIG. 5 is a view illustrating a plan view, a front view, and a left side view of an electrode assembly which is manufactured by a method for manufacturing an electrode assembly of the present invention.

### MODE FOR CARRYING OUT THE INVENTION

Hereinafter, the present invention will be described in detail with reference to the accompanying drawings so that the present invention can be easily carried out by a person skill in the art to which the present invention pertains. However, the present invention may be embodied in several different forms, and not be limited to the embodiments set forth herein.

A part unrelated to the description will be omitted so as to clearly describe the present invention, and the same reference symbols are affixed to identical or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an electrode assembly in which a negative electrode 3, a separator 1, and a positive electrode 2 are repeatedly stacked on each other, and a method for manufacturing the electrode assembly. Hereinafter, embodiments of the present invention will be described in more detail with reference to the accompanying drawings.

### First embodiment

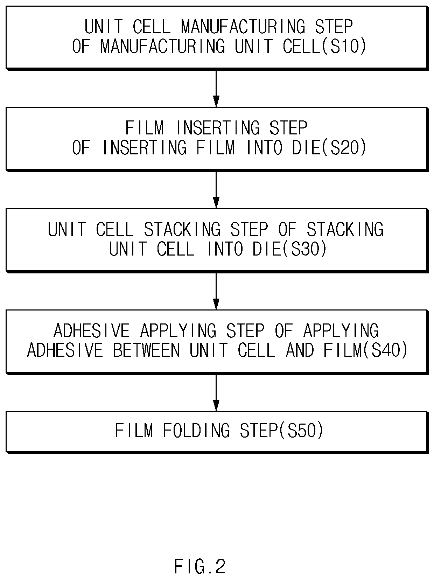

The present invention provides, as a first embodiment, a method for manufacturing an electrode assembly. As illustrated in FIG. 2 showing a sequence of a method for manufacturing an electrode assembly according to the present invention, a manufacturing method according to the embodiment comprises a unit cell manufacturing step (S10), a film inserting step (S20), a unit cell stacking step (S30), an adhesive applying step (S40), and a film folding step (S50).

During the unit cell manufacturing step (S10), a unit cell 10 having a predetermined stack structure of a negative electrode 3, a separator 1, and a positive electrode 2 is manufactured, and ends of separators 1 are bonded to each other to form a bonding portion 1a.

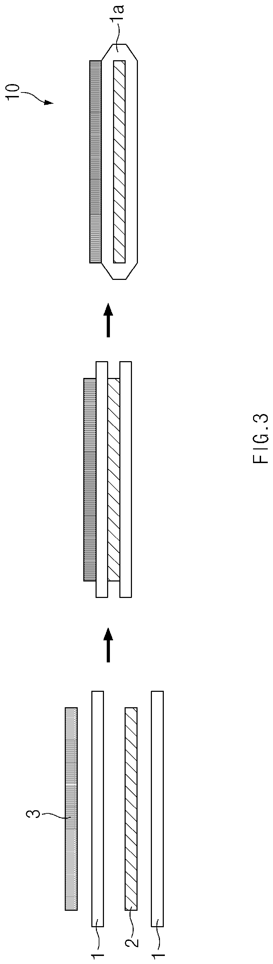

That is, as illustrated in FIG. 3 showing a state in which a negative electrode 3, a separator 1, a positive electrode 2 are stacked on each other and manufactured into a unit cell 10, a mono cell and a half cell, each of which has a predetermined stack structure, are manufactured as a unit cell 10. As illustrated in the drawing, the mono cell may have a structure in which the separator 1/the positive electrode 2/the separator 1/the negative electrode 3 are stacked sequentially from the bottom or a structure in which the separator 1/the negative electrode 3/the separator 1/the positive electrode 2 are stacked sequentially from the bottom. Also, a half cell is additionally provided, in which the uppermost electrode (a positive electrode or a negative electrode) is removed from the mono cell. In order for the separator 1 to be placed on the uppermost layer after the stacking of mono cells is complete, the half cell has a structure in which the separator 1/the negative electrode 3/the separator 1 are stacked sequentially from the bottom or a structure in which the separator 1/the positive electrode 2/the separator 1 are stacked sequentially from the bottom. Thus, the half cell is stacked after stacking of mono cells is complete, and thus, an electrode assembly stacked according to the present invention has a structure in which the separator 1 is placed in each of the lowermost layer and the uppermost layer.

Here, in the unit cell 10 manufactured with the mono cell and the half cell, the separator 1 has an area larger than each of areas of the positive electrode 2 and the negative electrode 3, and has ends protruding to both sides, respectively, as illustrated in the drawing. During the unit cell manufacturing step (S10), upper and lower surfaces of the ends of the separators 1 are bonded to each other to form the bonding portion 1a. The bonding portion 1a is not necessarily formed at all of the protruding ends of the separators 1, but it is desirable to be formed at the ends that face the film 30 when the unit cells 10 are stacked.

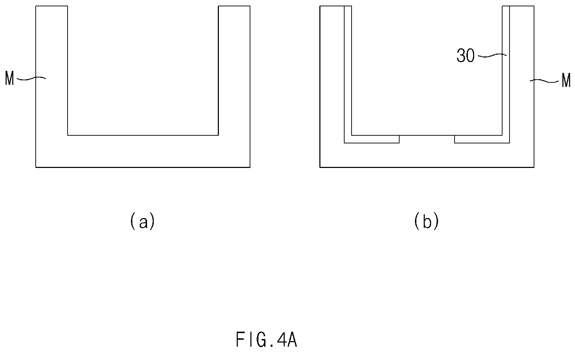

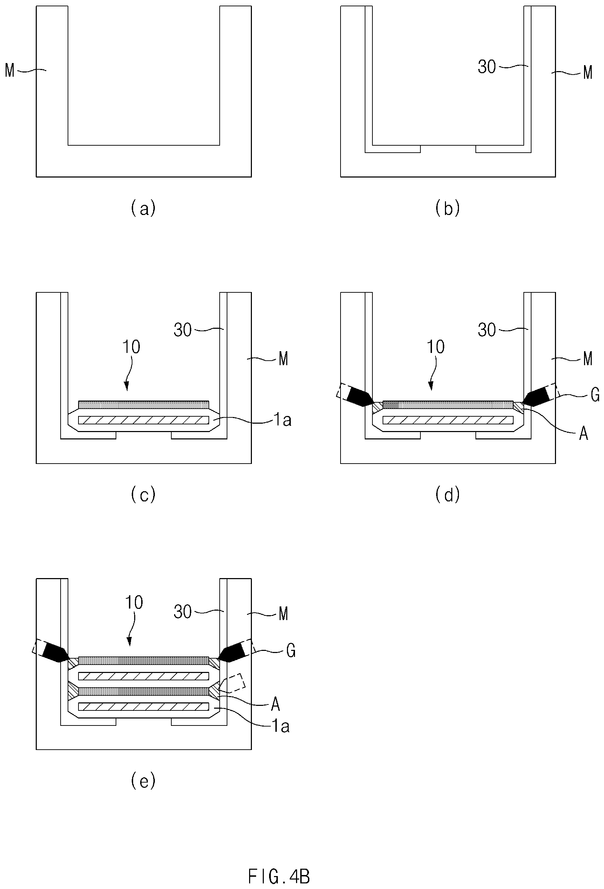

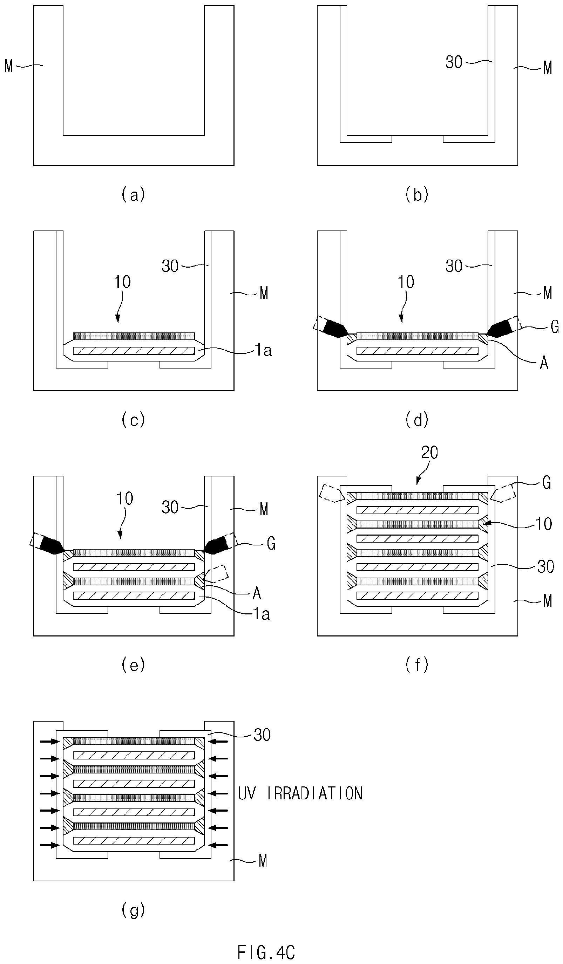

FIGS. 4A to 4C illustrate: a cross-section (a) of a die; a state (b) in which a film is attached to the inside of the die; a state (c) in which a unit cell is placed between the films; a state (d) in which an adhesive is applied between the placed unit cell and the film by a glue gun; and a state (e) in which a next unit cell is additionally placed, and an adhesive is applied between the placed unit cell and the film by a glue gun.

Referring to FIGS. 4A to 4C, during the film inserting step (S20), films 30 are disposed on the both inner circumferential surfaces facing each other inside a die M. The die M is manufactured to have a size enough to stack the unit cells 10 between the films 30 disposed therein and also has sufficient strength.

The die M may be configured such that the inner space thereof for stacking the unit cells 10 is formed in a hexahedral shape, and one side surface or both side surfaces thereof on which the film 30 is not disposed may be provided in an open state so that an operation of an gripper (not shown) or the like for conveying and stacking the unit cell 10 when the unit cells 10 are stacked is not interfered.

Also, the film inside the die M may be disposed in a temporarily fixed state on the inner circumferential surface of the die M so that vertically standing state thereof is maintained before an adhesive A is applied between the film 30 and the unit cell 10. That is, a clip, a holder, or the like for temporarily fixing the film 30 may be installed in the die M. Alternatively, the film 30, having an adhesive with weak adhesion applied on the surface thereof before disposed inside the die M, may be disposed. Such a means for temporarily fixing the film 30 may be embodied using other well-known methods as long as the film 30 may be easily separated from the inner circumferential surface of the die M after the manufacturing of the electrode assembly is completed.

Also, in order to enable a glue gun G to enter when the adhesive A is applied between the film 30 and the unit cell 10, the die M may have a slit (not shown) or the like through which the glue gun G may enter vertically or a structure in which the glue gun G is mounted inside the die M in a slidable manner.

When the film 30 is inserted into the die M in the film inserting step (S20), it is desirable that a lower end of the film 30 is inserted in a folded state so that the lower end is stacked below a lowermost surface of the first unit cell 10 when the first unit cell is stacked. The folded portion of the film 30 is provided to prevent the applied adhesive A from flowing out from the inside of the die M before cured, and a length of the folded portion may be determined according to an amount and state of the adhesive A.

Next, the unit cell stacking step (S30) is performed, in a state in which the film 30 is disposed inside the die M, and the glue gun G is ready to operate. During the unit cell stacking step (S30), the unit cells 10 are stacked at the right position between the two films 30 inside the die M. Here, each of the unit cells 10 is the mono cell as described above, and stacking is performed such that the separator 1 is placed on a lower side.

Then, the adhesive applying step (S40) is performed, in which the adhesive A is applied between the stacked unit cell 10 and the film 30 within the die M.

In the embodiment, the two films 30 are inserted to come into contact with both side wall surfaces, respectively, which face each other within the die M. Thus, the application of the adhesive A is simultaneously performed on the both side wall surfaces of the die M.

The unit cell stacking step (S30) and the adhesive applying step (S40) are repeatedly performed until stacking of predetermined unit cells 10 is completed after the film inserting step (S20). Here, as the unit cell 10 placed on the uppermost layer during the unit cell stacking step (S30), the half cell instead of the mono cell is stacked. When the application of the adhesive to the half cell is completed (when the stacking of the last unit cell is completed), a film folding step (S50) is performed in which an upper end of the film 30 is folded so that the upper end is stacked on an uppermost surface of the uppermost unit cell 10. The upper end of the folded film 30 comes into close contact with the separator 1 placed on the uppermost layer of the uppermost unit cell 10.

Here, the adhesive A used in the embodiment has non-conductive properties to prevent a short circuit, but types thereof are not limited. Thus, in a state in which the folding step (S50) is complete, the adhesive A injected between the bonding portions 1a of the vertically neighboring unit cells 10 may be not completely cured depending on the types.

That is, the adhesive A applied in the embodiment may be one selected from flowable resin, a heat curable adhesive, and a UV curable resin material.

The present invention further provides additional steps of curing the adhesive A so that the electrode assembly may be removed from the die M in a state in which the bonding of the film 30 is completed.

For example, in a case in which the adhesive A is the heat curable adhesive, a heating step (S41) may be further provided in which heat is applied to the die M to cure the heat curable adhesive.

On the other hand, in a case in which the adhesive A is the UV curable resin material, a UV irradiating step (S42) may be provided in which ultraviolet light is allowed to pass through the film 30 so that a portion to which the adhesive is applied is irradiated with the ultraviolet light.

In addition, the selection of the film 30 is not limited as long as the film has a non-conductive material, and may be made of a polymer material such as polyethylene terephthalate (PET) having favorable adhesion and excellent chemical resistance.

For reference, during the adhesive applying step (S40), the glue gun G may have a heating function to improve flowability of the adhesive, and a heating temperature and spraying pressure may be changed according to the thickness and material properties of the film 30 or the relative position and size of the bonding portion 1a. Here, as described above, the die M is configured to allow the tip of the glue gun G to enter the die or allow the glue gun G to be embedded in the die. The boding of the film 30 is performed within the die M because the heating step (S41) or the UV irradiating step (S42) are performed in a stacked state in the die.

In addition, the die M may be made of a thermally conductive material depending on whether the heating step (S41) or the UV irradiating step (S42) is performed or may have a structure of which the inside is irradiated with ultraviolet (UV) light (for example, a structure made of a transparent material or a structure having perforated holes through which ultraviolet light enter).

### Second embodiment

The present invention provides, as a second embodiment, an electrode assembly which may be manufactured through the manufacturing method according to the first embodiment.

The electrode assembly provided in the embodiment is an electrode assembly in which a negative electrode 3, a separator 1, and a positive electrode 2 are repeatedly stacked, and the electrode assembly comprises a film 30 disposed to cover one of the side surfaces defined by stacking the negative electrode 3, the separator 1, and the positive electrode 2. The film 30 is bonded with an adhesive A to the side surface defined by stacking the negative electrode 3, the separator 1, and the positive electrode 2.

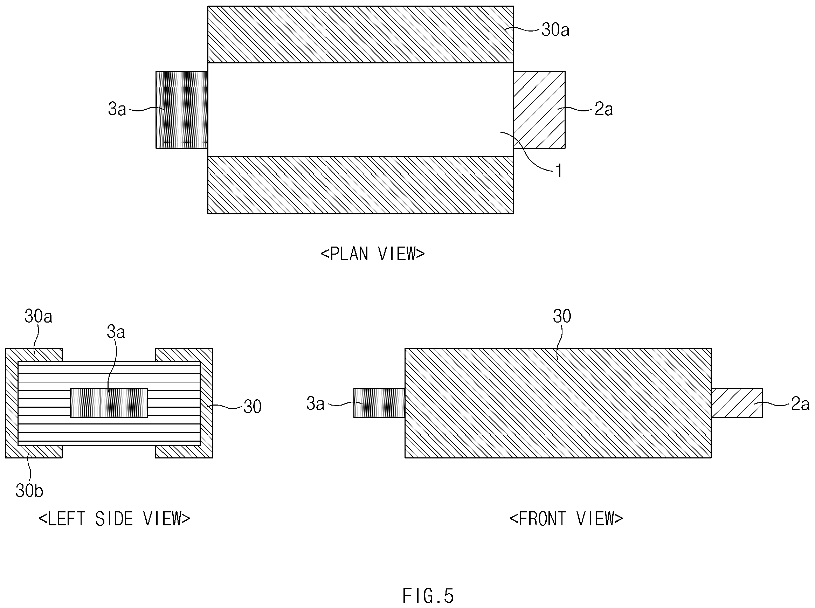

That is, referring to FIG. 5 illustrating a plan view, a front view, and a left side view of the electrode assembly which is manufactured by the method for manufacturing an electrode assembly of the present invention, the negative electrode 3 and the positive electrode 2 according to the present invention have a negative electrode tab 3a and a positive electrode tab 2a protruding to the sides, respectively. The positive electrode tab 2a and the negative electrode tab 3a are configured to protrude in directions opposite to each other, and the film 30 is attached to each of the side surfaces of the electrode assembly having two sides perpendicular to the sides from which the positive electrode tab 2a and the negative electrode tab 3a protrude. Here, an upper end 30a of the film 30 is folded to cover the uppermost surface of a portion in which the negative electrode 3, the positive electrode 2, and the separator 1 are stacked, and an lower end 30b of the film 30 is folded to cover the lower surface of a portion in which the negative electrode 3, the positive electrode 2, and the separator 1 are stacked.

In the electrode assembly having the technical features described above according to the present invention, the film 30 is attached to the side surface of the electrode assembly instead of using the fixing tape (that is, pressure generated when the fixing tape is attached is removed). Thus, the folding or wrinkling of the separator occurring in the structure of the related art may be prevent.

In the present invention, each unit cell 10 is bonded to the film 30 separately, and thus the unit cells 10 and the film 30 may be bonded to each other more stably although the pressure is not applied. Particularly, the bonding portion 1a is provided at the end of the unit cell 10, and thus, the movement of the individual unit cells 10 are fixed. Therefore, the entire alignment of the electrode assembly may also be improved.

In addition, in the present invention, the upper end and the lower end of the film 30 are folded to cover the uppermost layer and the lowermost layer of the electrode assembly, which may prevent the adhesive A from flowing down before the adhesive is cured.

Although the present invention is described by specific embodiments and drawings, the present invention is not limited thereto, and various changes and modifications may be made by a person skilled in the art to which the present invention pertains within the technical idea of the present invention and equivalent scope of the appended claims.

## Claims

1. An electrode assembly in which a negative electrode, a separator, and a positive electrode are repeatedly stacked, the electrode assembly comprising:
a film disposed to cover one of side surfaces defined by stacking the negative electrode, the separator, and the positive electrode,
wherein the film is bonded with an adhesive to the side surface defined by stacking the negative electrode, the separator, and the positive electrode.

2. The electrode assembly of claim 1, wherein the film is disposed on each of two facing side surfaces of the side surfaces defined by stacking the negative electrode, the separator, and the positive electrode.

3. The electrode assembly of claim 1, wherein the adhesive is one selected from flowable resin, a heat curable adhesive, and a UV curable resin material.

4. The electrode assembly of claim 1, wherein the film has a length longer than a height of the side surface defined by stacking the negative electrode, the separator, and the positive electrode, and
both ends of the film extend from the side surface and are folded to be bonded to a lowermost surface and an uppermost surface, respectively.

5. A method for manufacturing an electrode assembly in which a negative electrode, a separator, and a positive electrode are repeatedly stacked, the method comprising:
a unit cell manufacturing step (S10) of manufacturing a unit cell having a predetermined stack structure of the negative electrode, the separator, and the positive electrode;
a film inserting step (S20) of inserting a film into a die;
a unit cell stacking step (S30) of stacking the unit cell into the die; and
an adhesive applying step (S40) of applying an adhesive between the stacked unit cell and the film within the die,
wherein the unit cell stacking step (S30) and the adhesive applying step (S40) are repeatedly performed until stacking of predetermined unit cells is completed after the film inserting step (S20).

6. The method of claim 5, wherein, in the unit cell manufacturing step (S10), the unit cell is manufactured so that ends of the separators are bonded to each other to form a bonding portion, and
in the adhesive applying step (S40), the adhesive is applied to be injected between the bonding portions of the vertically neighboring unit cells.

7. The method of claim 6, wherein, in the unit cell manufacturing step (S10), a mono cell in which the separator/the negative electrode/the separator/the positive electrode are stacked sequentially from the bottom or a mono cell in which the separator/the positive electrode/the separator/the negative electrode are stacked sequentially from the bottom is manufactured as the unit cell.

8. The method of claim 7, wherein, in the unit cell manufacturing step (S10), a half cell in which the separator/the negative electrode/the separator are stacked sequentially from the bottom or a half cell in which the separator/the positive electrode/the separator are stacked sequentially from the bottom is separately manufactured as the unit cell in addition to the mono cell, and
while the unit cell stacking step (S30) is repeatedly performed, the mono cells are stacked, wherein, when the unit cell stacking step (S30) is finally performed, the half cell is stacked.

9. The method of claim 5, wherein the adhesive applied in the adhesive applying step (S40) is one selected from flowable resin, a heat curable adhesive, and a UV curable resin material.

10. The method of claim 9, wherein the adhesive applied in the adhesive applying step (S40) is the heat curable adhesive, and
the method further comprises a heating step (S41) of applying heat to the die to cure the heat curable adhesive.

11. The method of claim 9, wherein the adhesive applied in the adhesive applying step (S40) is the UV curable resin material, and
the method further comprises a UV irradiating step (S42) of allowing ultraviolet light to pass through the film so that a portion to which the adhesive is applied is irradiated with the ultraviolet light.

12. The method of claim 5, wherein, when the film is inserted into the die in the film inserting step (S20),
a lower end of the film is inserted in a folded state so that the lower end is stacked below a lowermost surface of the first unit cell when the first unit cell is stacked.

13. The method of claim 12, further comprising a film folding step (S50) in which, when stacking of the last unit cell is complete, an upper end of the film is folded so that the upper end is stacked on an uppermost surface of the uppermost unit cell.
